# EUROPEAN PATENT APPLICATION

(11) **EP 4 752 739 A1**
(43) Date of publication of application: **03.06.2026**
(21) Application number: 25219001.2
(22) Date of filing: 27.11.2025
(51) Int. Cl.: G06F 13/40, G06F 13/42, H04L 45/00, H04L 49/109, H04L 49/15, H04L 49/25, G06F 15/173, G06F 13/16, G06F 15/78, H04L 45/745

(54) **SYSTEM-ON-CHIP INCLUDING A PLURALITY OF CHIPS AND METHOD OF OPERATING THE SAME**

(30) Priority: 27.11.2024 KR 20240172829
(71) Applicant: Samsung Electronics Co., Ltd., Suwon-si, Gyeonggi-do 16677 (KR)
(72) Inventor: SEO, Youngduke, 16677 Suwon-si (KR); PARK, Sungcheol, 16677 Suwon-si (KR); CHANG, Joonyoung, 16677 Suwon-si (KR); CHOI, Geunho, 16677 Suwon-si (KR)
(74) Representative: Marks & Clerk LLP

(57) **Abstract**

A system-on-chip (SoC) includes a plurality of chips (121, 122, 123, 124) connected to each other. Among the plurality of chips (121, 122, 123, 124), a first chip (121) may include a plurality of first interfaces (IT11, IT12, IT13, IT14), respectively disposed on edges of the first chip (121), a first central processing unit, CPU, (CPU1) configured to execute a first program, and a first interconnect (IT11) configured to transmit a first address code (ADDC1) to a (1-1)-th interface (IT11) corresponding to a first number of first interface bits of the first address code (ADDC1) stored to correspond to the first program in response to a first request (R1) corresponding to the first program being received from the first CPU (CPU1).

## Description

### BACKGROUND

Some example embodiments relate to a system-on-chip including a plurality of chips and/or a method of operating the same.

With the recent trend toward higher integration and/or miniaturization of semiconductor devices, various research efforts have been made to increase the yield and/or efficiency of a process of manufacturing semiconductor devices. For example, a system-on-chip (SoC) using a chiplet architecture, in which two or more dies are independently fabricated and subsequently connected during a packaging process to implement a single semiconductor structure, is currently in use.

In such a chiplet architecture, a plurality of connected dies may communicate with each other using various interfaces such as Bunch of Wires (BoW), Peripheral Component Interconnect Express (PCIe), or Universal Chiplet Interconnect Express (UCIe).

Channels for communication between a plurality of dies may be implemented on a substrate external to the plurality of dies, or similar structures.

### SUMMARY

Some example embodiments provide a system-on-chip reducing the amount of data stored and/or processed by each of a plurality of chips to access other chips.

According to some example embodiments, a system-on-chip (SoC) includes a plurality of chips connected to each other. A first chip among the plurality of chips comprises a plurality of first interfaces respectively arranged on edges of the first chip, a first central processing unit (CPU) configured to execute a first program, and a first interconnect configured to transmit a first address code to a (1-1)-th interface. The (1-1)-th interface corresponds to a first number of first interface bits of the first address code stored to correspond to the first program. The first interconnect is configured to transmit the first address code in response to a first request being received from the first CPU. The first request corresponds to the first program.

Alternatively or additionally according to some example embodiments, a method of operating a system-on-chip (SoC) including a plurality of chips includes running a first program by a first central processing unit (CPU) included in a first chip among the plurality of chips, and transmitting a first address code to a (1-1)-th interface corresponding to a first number of first interface bits of the first address code stored to correspond to the first program. In response to a first request corresponding to the first program being received from the first CPU, the method further includes generating, by the (1-1)-th interface, a second address code by replacing the first interface bits with a second number of second interface bits, the generating the second address code starting from a least significant bit of a first user code stored to correspond to the first program, and transmitting the second address code to a (2-1)-th interface of a second chip adjacent to the (1-1)-th interface, the second chip among the plurality of chips.

Alternatively or additionally according to some example embodiments, a system-on-chip (SoC) includes a first chip and a second chip adjacent to each other. The first chip comprises a (1-1)-th interface on an edge adjacent to the second chip, a first central processing unit (CPU) configured to execute a first program, and a first interconnect configured to transmit a first address code to a (1-1)-th interface corresponding to a first number of first interface bits of the first address code stored to correspond to the first program, the transmitting the first address code in response to a first request corresponding to the first program being received from the first CPU. The (1-1)-th interface is configured to generate a second address code by replacing the first interface bits with a second number of second interface bits of a first user code stored to correspond to the first program, and to transmit the second address code to the second chip through a (2-1)-th interface adjacent to the (1-1)-th interface.

Alternatively or additionally according to some example embodiments, there is provided a system-on-chip (SoC) including a first chip on a substrate. The first chip comprises a plurality of first interfaces, a first central processing unit (CPU) configured to execute a first program, and a first interconnect configured to transmit a first address code to a (1-1)-th interface. The (1-1)-th interface corresponds to a first number of first interface bits of the first address code stored to correspond to the first program. The first interconnect is configured to transmit the first address code to a second chip on the substrate. The second chip neighbors the first chip.

In some example embodiments, the substrate includes an interposer.

According to some example embodiments, the first chip includes a read-only memory (ROM) configured to store the first interface bits.

According to some example embodiments, a number of the first interface bits is less than or equal to five.

According to some example embodiments, two (to the power of the number of first interface bits) is greater than or equal to a number of chips on the substrate.

According to some example embodiments, two (to the power of (the number of first interface bits minus one)) is less than the number of chips on the substrate.

At least some of the above and other features of the invention are set out in the claims.

### BRIEF DESCRIPTION OF DRAWINGS

FIG. 1 is a perspective view of a system-on-chip according to some example embodiments.
FIG. 2 is a cross-sectional view of a portion of the system-on-chip of FIG. 1, taken along line A-A'.
FIG. 3 is a block diagram illustrating a configuration of a first chip according to some example embodiments.
FIG. 4 is a diagram illustrating a first lookup table stored in a first interconnect according to some example embodiments.
FIG. 5A is a diagram illustrating a configuration in which the first interconnect transmits a first address code to a (1-1)-th interface in response to a first request, according to some example embodiments.
FIG. 5B is a diagram illustrating the first address code according to some example embodiments.
FIG. 6A is a diagram illustrating a configuration in which the (1-1)-th interface generates a second address code using a first user code, according to some example embodiments.
FIG. 6B is a diagram illustrating a configuration in which the (1-1)-th interface generates a second user code from the first user code, according to some example embodiments.
FIG. 7 is a diagram illustrating a configuration in which a second interconnect transmits a second address code to a (2-2)-th interface, according to some example embodiments.
FIG. 8A is a diagram illustrating a configuration in which the (2-2)-th interface generates a third address code based on a second user code, according to some example embodiments.
FIG. 8B is a diagram illustrating a configuration in which the (2-2)-th interface generates a third user code based on a second user code, according to some example embodiments.
FIG. 9 is a diagram illustrating a configuration in which a third interconnect performs an operation on a third memory based on a third address code, according to some example embodiments.
FIG. 10 is a diagram illustrating a second address code in which second interface bits have a self-address value, according to another embodiment.
FIG. 11 is a diagram illustrating a configuration in which a second chip performs an operation on a second memory when the second interface bits have a self-address value, according to some example embodiments.
FIG. 12 is a diagram illustrating a configuration in which the first interconnect transmits a first bypass code to a (1-2)-th interface, according to some example embodiments.
FIG. 13A is a diagram illustrating a first bypass code according to some example embodiments.
FIG. 13B is a diagram illustrating a configuration in which the (1-2)-th interface generates a second bypass code based on a first bypass user code, according to some example embodiments.
FIG. 13C is a diagram illustrating a configuration in which the (1-2)-th interface generates a second bypass user code from a first bypass user code, according to some example embodiments.
FIG. 14 is a flowchart illustrating a method of transmitting a first address code to a second chip in response to a first request, according to some example embodiments.
FIG. 15 is a flowchart illustrating a method of transmitting a second user code to a second chip, according to some example embodiments.
FIG. 16 is a flowchart illustrating the operation of a second interconnect based on second interface bits included in a second address code, according to some example embodiments.

### DETAILED DESCRIPTION

Hereinafter, some example embodiments will be described with reference to the accompanying drawings.

The term "first," "second," or the like used herein may modify various elements regardless of the order and/or priority thereof, and is used only for distinguishing one element from another element, without limiting example embodiments.

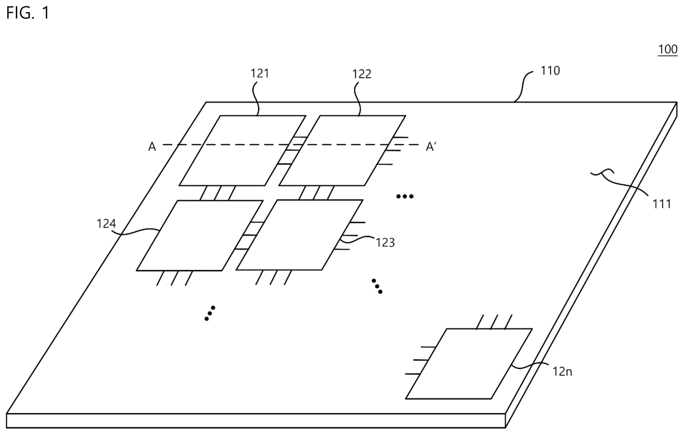

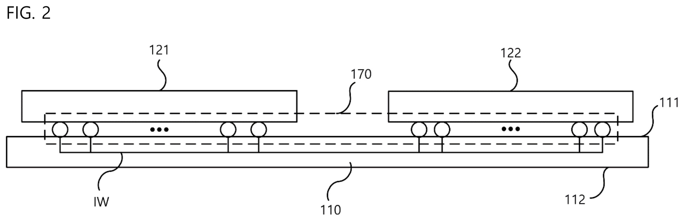

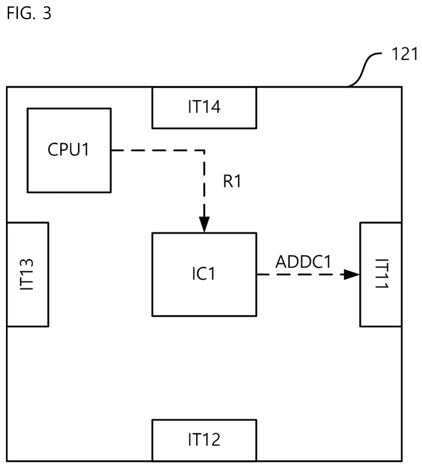

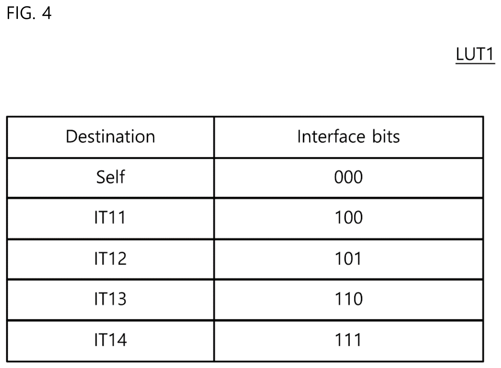

FIG. 1 is a perspective view of a system-on-chip according to some example embodiments. FIG. 2 is a cross-sectional view of a portion of the system-on-chip of FIG. 1, taken along line A-A'. FIG. 3 is a block diagram illustrating a configuration of a first chip according to some example embodiments. FIG. 4 is a diagram illustrating a first lookup table stored in a first interconnect according to some example embodiments.

Referring to FIG. 1, a system-on-chip 100 according to some example embodiments may include a plurality of chips 121 to 12n disposed on an interposer 110.

The system-on-chip 100 may be included in various devices, including, but not limited to, one or more of a server, a computer, a smartphone, a tablet, a personal digital assistant (PDA), a digital camera, a portable multimedia player (PMP), a wearable device, an Internet of Things (IoT) device, a smart speaker, or automotive electronics.

For example, the system-on-chip 100 may include a plurality of chips 121 to 12n disposed in a matrix on a first surface 111 of the interposer 110.

For example, the plurality of chips 121 to 12n may include a first chip 121 to a fourth chip 124 arranged in a 2x2 array.

For example, the plurality of chips 121 to 12n may be arranged in the form of a matrix represented by a product of rows and columns, each having an arbitrary positive integer greater than or equal to 2. A number of rows in the matrix may be the same as, or different from (e.g., greater than or less than) a number of columns in the matrix.

According to some example embodiments, among the plurality of chips 121 to 12n, adjacent chips may be connected to each other. For example, chips that neighbor each other in a row direction may be connected to one another; alternatively or additionally, chips that neighbor each other in a column direction may be connected to one another. In addition, the plurality of chips 121 to 12n may be connected to each other to exchange information such as data and/or code. The information may be transmitted and/or received in a serial and/or a parallel manner; example embodiments are not limited thereto. The information may be digital and/or analog; example embodiments are not limited thereto.

For example, the plurality of chips 121 to 12n may communicate with each other using one or more of various interfaces such as one or more of Bunch of Wires (BoW), Peripheral Component Interconnect Express (PCIe), or Universal Chiplet Interconnect Express (UCIe). However, the types of interfaces over which the plurality of chips 121 to 12n communicate with each other are limited to the above-mentioned examples.

Referring to FIGS. 1 and 2, the first chip 121 and the second chip 122 according to some example embodiments may be mounted on the interposer 110 through a plurality of bumps 170.

According to some example embodiments, the first chip 121 and the second chip 122 may be disposed on the first surface 111 of the interposer 110. Alternatively according to some example embodiments, the first chip 121 may be disposed on the first surface 111 of the interposer 110 and the second chip 122 may be disposed on the second surface 112, parallel to the first surface 111, of the interposer 110.

In addition, the first chip 121 and the second chip 122 may be connected through the interposer 110.

For example, the first chip 121 and the second chip 122 may be connected through at least one internal wiring IW formed within the interposer 110. The at least one internal wiring IW may be a conductive wiring; example embodiments are not limited thereto.

For example, the first chip 121 and the second chip 122 may exchange information such as data and/or code through the internal wiring IW formed within the interposer 110.

For example, the system-on-chip 110 according to some example embodiments may have a structure in which a plurality of chips 121 and 122 are disposed on the interposer 110. Thus, for example, the system-on-chip 100 according to some example embodiments may be understood to have a chiplet architecture.

According to some example embodiments, each of the plurality of chips 121 to 12n may include a plurality of interfaces, respectively arranged on edges of each of the chips 121 to 12n. For example, in an event that a chip among the plurality of chips has a rectangular or square shape, there may be four or fewer interfaces among each edge of the chip. Example embodiments are not limited thereto.

Referring to FIG. 3, the first chip may include a first central processing unit (CPU) CPU1, a first interconnect IC1, and a plurality of first interfaces IT11 to IT14.

For example, the first chip 121 may include a plurality of first interfaces IT11 and IT14, respectively disposed on edges of the first chip 121.

For example, the first chip 121 may include a (1-1)-th interface IT11 disposed on a right edge from the center of the first chip 121. In addition, the first chip 121 may include a (1-2)-th interface IT12 disposed on a bottom edge from the center of the first chip 121. In addition, the first chip 121 may include a (1-3)-th interface IT13 disposed on a left edge from the center of the first chip 121. In addition, the first chip 121 may include a (1-4)-th interface IT14 disposed on a top edge from the center of the first chip 121. As used herein, an (n-m)-th interface, may be a m^{th} interface of an n^{th} chip, where n and m are integers greater than or equal to two. Accordingly, a (1-1)-th interface may be a first interface of the first chip (e.g., a first first interface), a (1-2)-th interface may be a second interface of the first chip (e.g., a second first interface), a (2-1)-th interface may be a first interface of the second chip (e.g., a first second interface), a (2-2)-th interface may be a second interface of the second chip (e.g., a second second interface), and so on.

The first chip 121 may also include the first CPU CPU1 controlling at least some of or up to the overall operation of the first chip 121.

The first CPU CPU1 may execute, for example, software (or program) to control at least one other element (for example, the first interconnect IC1) of the first chip 121, and may perform various data processing or computations. The first CPU CPU1 may include one or more of a central processing unit, an arithmetic logic unit, a microprocessor, or the like, and may control the overall operation of the first chip 121. Accordingly, the operations performed by the first chip 121 may be interpreted as being performed under the control of the first CPU CPU1.

According to some example embodiments, the first CPU CPU1 may execute a first program. For example, the first CPU CPU1 may execute at least one code, stored to correspond to the first program, to execute the first program. For example, the first CPU CPU1 may execute at least one code, stored on the first chip, and corresponding to the first program, to execute the first program.

For example, an access to an element included in another chip (for example, a third chip 123) may be required to execute the first program or may be used during the execution of the first program. Accordingly, a code stored to correspond to the first program may include a first address code ADDC1 for specifying the element included in another chip (for example, the third chip 123).

The first CPU CPU1 according to some example embodiments may transmit a first request R1 to the first interconnect IC1 when an access to another chip is required or expected during execution of the first program.

For example, the first CPU CPU1 may transmit the first request R1, including the first address code ADDC1, to the first interconnect IC1 when an access to another chip is expected during execution of the first program.

The first chip 121 may further include the first interconnect IC1 connected to the first CPU CPU1 and to the plurality of first interfaces IT11 to IT14.

Referring to FIG. 4, the first interconnect IC1 may store a first lookup table LUT1. The first lookup table LUT1 may be or may include or be embodied as a first set of registers, such as a first set of non-volatile registers and/or read-only memory (ROM); example embodiments are not limited thereto.

For example, the first interconnect IC1 may store the first lookup table LUT1 including interface bits corresponding to each of the plurality of first interfaces IT11 to IT14.

The first lookup table LUT1 may include a specified number of (for example, three) interface bits corresponding to each of the plurality of first interfaces IT11 to IT14.

For example, the first lookup table LUT1 may include interface bits including three bits corresponding to each of the plurality of first interfaces IT11 to IT14. For example, for each of the plurality of first interfaces IT11 to IT14 there may be an interface bits entry that comprises a predefined number of (e.g., three) bits.

For example, the first lookup table LUT1 may include interface bits "100" corresponding to the (1-1)-th interface IT11. In addition, the first lookup table LUT1 may include interface bits "101" corresponding to the (1-2)-th interface IT12.

Alternatively or additionally in some example embodiments, two to the power of the number of interface bits is greater than or equal to the number of chips in the plurality of chips in the substrate. For instance, where n is the number of interface bits, then 2*ⁿ* may be greater than or equal to the number of chips N.

Alternatively or additionally in some example embodiments, two to the power of (the number of interface bits minus one) is less than the number of chips in the plurality of chips in the substrate. For instance, where n is the number of interface bits, then 2^{*n*-1} may be less than the number of chips N. For instance, the number of chips N may be greater than 2^{*n*-1} and less than or equal to 2*ⁿ*.

In addition, the first lookup table LUT1 may include interface bits such as "000" corresponding to a self-address value.

The first interconnect IC1 may transmit information such as data and/or code to one of the plurality of first interfaces IT11 to IT14 based on the pre-stored first lookup table LUT1.

Referring to FIGS. 3 and 4, the first interconnect IC1 according to some example embodiments may transmit the first address code ADDC1 to the (1-1)-th interface IT11.

For example, the first interconnect IC1 may transmit the first address code ADDC1 to the (1-1)-th interface IT11 identified through the first lookup table LUT1, from among the plurality of first interfaces IT11 to IT14, in response to the first request R1.

For example, when the bits at a specified position in the first address code ADDC1 transmitted along with the first request R1 are "100," the first interconnect IC1 may transmit the first address code ADDC1 to the (1-1)-th interface IT11 corresponding to "100" based on the first lookup table LUT1.

For example, the first interconnect IC1 may transmit the first address code ADDC1 to the (1-1)-th interface IT11 based on the first lookup table LUT1 when the bits at the specified position in ADDC1 are determined to correspond to IT11.

The (1-1)-th interface IT11 may communicate with an interface, disposed adjacent to or neighboring the (1-1)-th interface IT11, of the second chip 122 based on the first address code ADDC1 and/or data. For example, the (1-1)-th interface IT11 may communicate with an interface connected to the (1-1)-th interface IT11 based on the first address code ADDC1 and/or data.

For example, one of the plurality of chips 121 to 12n may access another chip based on a lookup table in which interface bits corresponding to each interface are stored.

In some example embodiments, the first chip 121 may transmit the address code and data to the second chip 122 based on the first lookup table LUT1 so as to access at least one element included in the second chip 122. For example, the first chip 121 may access data stored in a memory included in the second chip 122.

In some example embodiments, the first chip 121 may transmit the address code and data to the second chip 122 based on the first lookup table LUT1 to access at least one element included in a third chip 123 connected through the second chip 122 (e.g., adjacent to the second chip 122 and included in the SOC 100).

Referring to the above-described configurations, the first interconnect IC1 may store the first lookup table LUT1 including interface bits corresponding to the first interfaces IT11 to IT14 included in the first chip 121.

In addition, the first interconnect IC1 may transmit information such as address codes and/or data to an interface connected to another chip based on the first lookup table LUT1. The first lookup table LUT1 may be pre-stored; example embodiments are not limited thereto.

Accordingly, the first interconnect IC1 may store the first lookup table LUT1 including a relatively smaller amount of data, compared to a case in which the first chip 121 stores a lookup table including bits corresponding to each of the plurality of chips 121 to 12n.

For example, when the total number of chips 121 to 12n is 16, the first chip 121 may store a first lookup table LUT1 containing bits corresponding to 4 interfaces, and a self-address value. This requires fewer bits compared to storing a lookup table including bits corresponding to each of the 16 chips. For example, according to some example embodiments, the first lookup table LUT1 may have five rows, each of three interface bits, while a case where all 16 chips have addresses stored therein may have 16 rows, each of four bits.

Thus, the system-on-chip 100 according to some example embodiments may reduce the amount of data that each chip stores and processes to access other chips.

For example, the system-on-chip 100 according to some example embodiments may improve the performance of each of the plurality of chips 121 to 12n.

In addition, referring to the above-described configurations, the system-on-chip 100 according to some example embodiments may store lookup tables for their respective interfaces to change the number and arrangement of the plurality of chips 121 to 12n without modifying the pre-stored lookup tables in each chip. Data and/or code may be routed appropriately, according to some example embodiments.

As a result, the system-on-chip 100 according to some example embodiments may reduce the overhead required to or used to change the number and/or arrangement of the plurality of chips 121 to 12n.

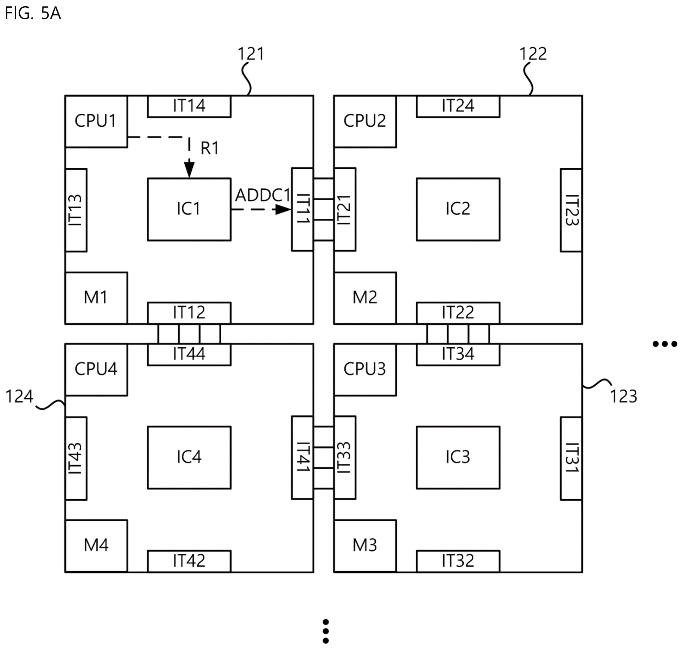

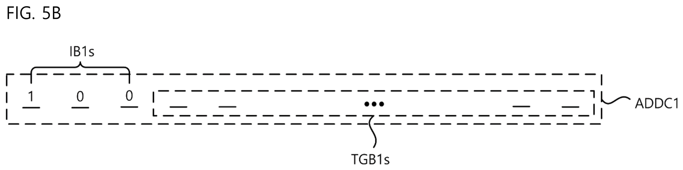

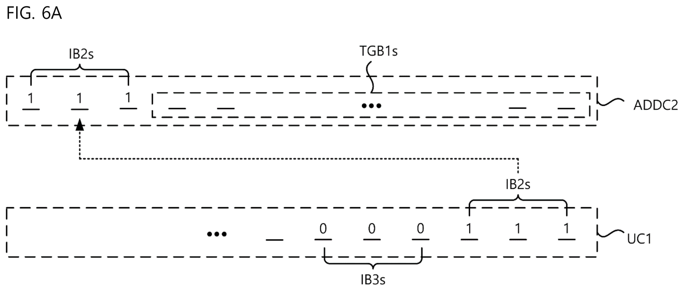

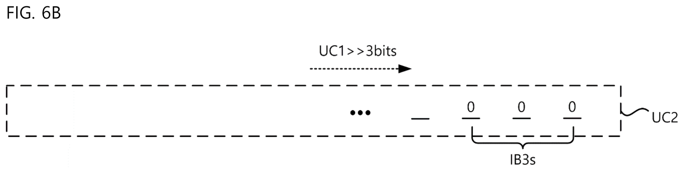

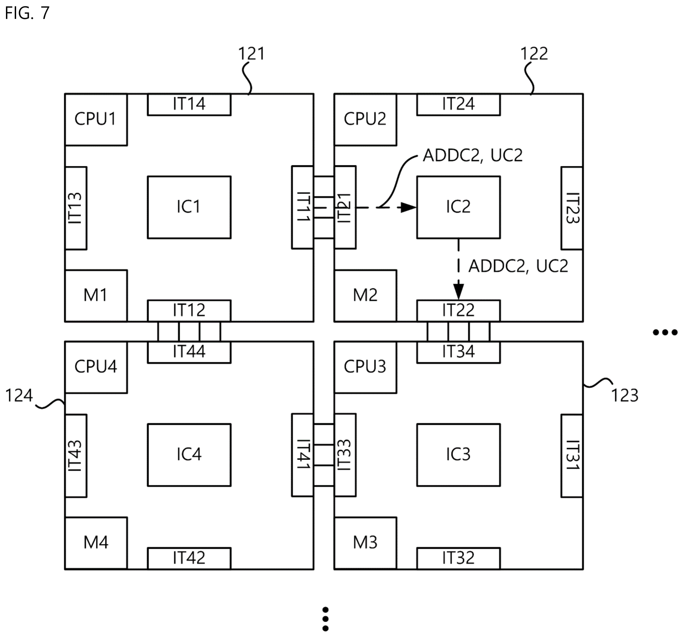

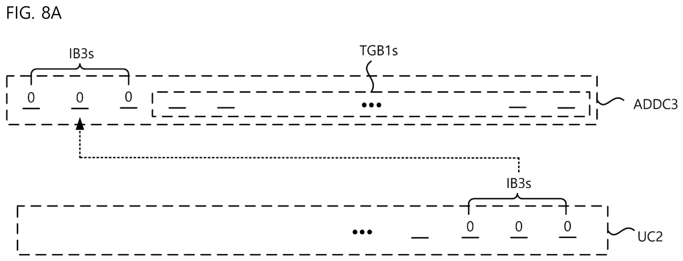

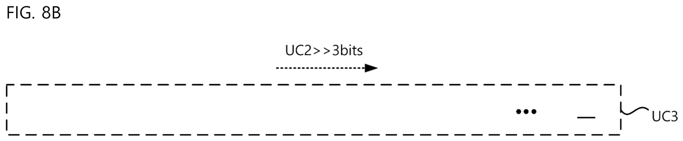

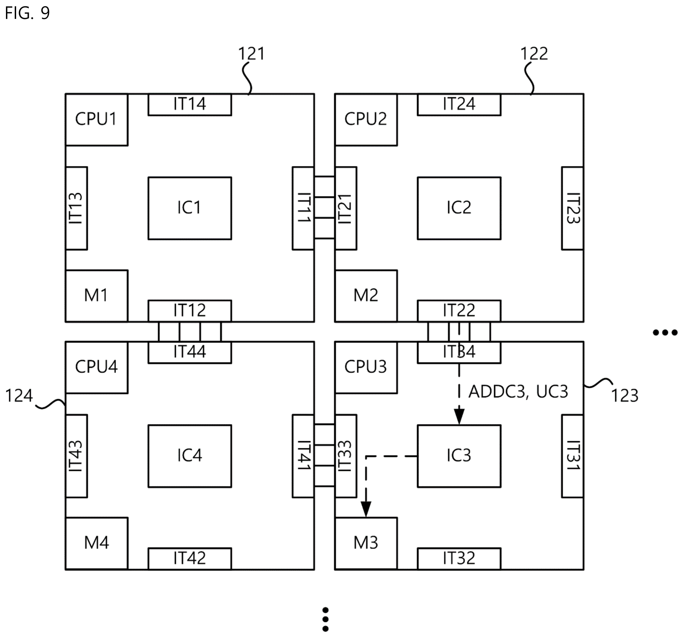

FIG. 5A is a diagram illustrating a configuration in which the first interconnect transmits a first address code to a (1-1)-th interface in response to a first request, according to some example embodiments. FIG. 5B is a diagram illustrating the first address code according to some example embodiments. FIG. 6A is a diagram illustrating a configuration in which the (1-1)-th interface generates a second address code using a first user code, according to some example embodiments. FIG. 6B is a diagram illustrating a configuration in which the (1-1)-th interface generates a second user code from the first user code, according to some example embodiments. FIG. 7 is a diagram illustrating a configuration in which a second interconnect transmits a second address code to a (2-2)-th interface, according to some example embodiments. FIG. 8A is a diagram illustrating a configuration in which the (2-2)-th interface generates a third address code based on a second user code, according to some example embodiments. FIG. 8B is a diagram illustrating a configuration in which the (2-2)-th interface generates a third user code based on a second user code, according to some example embodiments. FIG. 9 is a diagram illustrating a configuration in which a third interconnect performs an operation on a third memory based on a third address code, according to some example embodiments.

Referring to FIGS. 5A to 9, the first CPU CPU1 (or the first chip 121) according to some example embodiments may access data stored in a third memory M3 included in the third chip 123. The third memory M3 may be or may include volatile and/or non-volatile memory.

For example, when data stored in the third memory M3 is used during execution of the first program, the first CPU CPU1 may execute at least one code, stored to correspond to the first program, so as to access the data stored in the third memory M3.

According to some example embodiments, each of the plurality of chips 121 to 12n may include a CPU controlling some of, or up to the overall operation of each respective chip. For example, the first chip 121 may include a first CPU CPU1 controlling the overall operation of the first chip 121. The second chip 122 may include a second CPU CPU2 controlling the overall operation of the second chip 122. The third chip 123 may include a third CPU CPU3 controlling the overall operation of the third chip 123. The fourth chip 124 may include a fourth CPU CPU4 controlling the overall operation of the fourth chip 124.

According to some example embodiments, at least one of the first CPU CPU1 to the fourth CPU CPU4 may be omitted.

Alternatively or additionally, each of the plurality of chips 121 to 12n according to some example embodiments may include a memory storing data. For example, the first chip 121 may include a first memory M1. The second chip 122 may include a second memory M2. The third chip 123 may include a third memory M3. The fourth chip 124 may include a fourth memory M4.

According to some example embodiments, at least one of the first memory M1 to the fourth memory M4 may be omitted. Alternatively or additionally, a size of and/or a capacity of each of the first memory M1 to the fourth memory M4 may be the same, or at least one of the first memory M1 to the fourth memory M4 may have a different one of a size and/or a capacity than at least one other of the first memory M1 to the fourth memory M4.

According to some example embodiments, each of the plurality of chips 121 to 12n may a plurality of interfaces, respectively disposed on edges of each of the chips 121 to 12n.

For example, the first chip 121 may include a plurality of first interfaces IT11 to IT14. For example, the first chip 121 may include a (1-1)-th interface IT11 to a (1-4)-th interface IT14, respectively disposed on edges thereof. The second chip 122 may include a plurality of second interfaces IT21 to IT24. The second chip 122 may include a (2-1)-th interface IT21 to a (2-4)-th interface IT24, respectively disposed on edges thereof. The third chip 123 may include a plurality of third interfaces IT31 to IT34. The third chip 123 may include a (3-1)-th interface IT31 to a (3-4)-th interface IT34, respectively disposed on edges thereof. The fourth chip 124 may include a plurality of fourth interfaces IT41 to IT44. The fourth chip 124 may include a (4-1)-th interface IT41 to a (4-4)-th interface IT44, respectively disposed on edges thereof.

Adjacent chips or neighboring chips within the plurality of chips 121 to 12n may communicate through adjacent interfaces thereof. In some example embodiments, diagonally adjacent chips within the plurality of chips 12n may not communicate through adjacent interfaces.

For example, the first chip 121 and the second chip 122 may exchange information such as data and/or codes through the (1-1)-th interface IT11 included in the first chip 121 and the (2-1)-th interface IT21 included in the second chip 122.

Each of the plurality of chips 121 to 12n may include an interconnect connected to respective interfaces thereof.

For example, the first chip 121 may include a first interconnect IC1 connected to the plurality of first interfaces IT11 to IT14. The second chip 122 may include a second interconnect IC2 connected to the plurality of second interfaces IT21 to IT24. The third chip 123 may include a third interconnect IC3 connected to the plurality of third interfaces IT31 to IT34. The fourth chip 124 may include a fourth interconnect IC4 connected to the plurality of fourth interfaces IT41 to IT44.

The interconnect, included in each of the plurality of chips 121 to 12n, may store a lookup table including interface bits corresponding to the interfaces included in each chip. The lookup table may be stored in nonvolatile memory and/or as read-only memory, such as but not limited to memory embodied with a plurality of fuses and/or a plurality of antifuses; example embodiments are not limited thereto.

For example, the first interconnect IC1 may store a first lookup table (for example, the first lookup table LUT1 of FIG. 4) including interface bits corresponding to the plurality of first interfaces IT11 to IT14. The second interconnect IC2 may store a second lookup table including interface bits corresponding to the plurality of second interfaces IT21 to IT24. The third interconnect IC3 may store a third lookup table including interface bits corresponding to the plurality of third interfaces IT31 to IT34. The fourth interconnect IC4 may store a fourth lookup table including interface bits corresponding to the plurality of fourth interfaces IT41 to IT44.

The first to fourth lookup tables according to some example embodiments may store substantially the same bits. For example, each of the first to fourth lookup tables may store the same bits for the interfaces disposed in the same direction from the center of each chip. For example, the first and second lookup tables may store bits "100" corresponding to interfaces disposed to the right of the center of each chip (for example., the (1-1)-th interface IT11 and the (2-3)-th interface IT23).

Referring to FIGS. 5A and 5B, the first interconnect IC1 according to some example embodiments may transmit a first address code ADDC1 to the (1-1)-th interface IT11 in response to a first request R1.

For example, the first interconnect IC1 may transmit the first address code ADDC1 to the (1-1)-th interface IT11 based on the first lookup table LUT1 when the first interface bits IB1s of the first address code ADDC1 correspond to the (1-1)-th interface IT11.

For example, when the first interface bits IB1s within the first address code ADDC1 transmitted with the first request R1 are set to "100," the first interconnect IC1 may transmit the first address code ADDC1 to the (1-1)-th interface IT11 corresponding to "100" based on the first lookup table LUT1.

The first interface bits IB1s may be interpreted as the first number of bits starting from the most significant bit MSB of the first address code ADDC1. For example, the first interface bits IB1s may be interpreted as three bits starting from the MSB of the first address code ADDC1.

For example, the first interconnect IC1 may transmit the first address code ADDC1 to an interface corresponding to the upper three bits of the first address code ADDC1 on the first lookup table LUT1 in response to the first request R1 transmitted from the first CPU CPU1.

Referring to FIG. 6A, the (1-1)-th interface IT11 according to some example embodiments may generate a second address code ADDC2 based on the first address code ADDC1 and the first user code UC1.

For example, the (1-1)-th interface IT11 may generate the second address code ADDC2 based on the first address code ADDC1 and the first user code UC1 in response to the first address code ADDC1 being received from the first interconnect IC1

The first user code UC1 may be stored on the first chip 121 (or the first memory M1) corresponding to the first program.

The (1-1)-th interface IT11 may replace first interface bits IB1s of the first address code ADDC1 with the second interface bits IB2s of the first user code UC1 to generate the second address code ADDC2.

The second interface bits IB2s may be interpreted as the first number of bits starting from a least significant bit LSB in the first user code UC1. For example, the second interface bits IB2s may be interpreted as lower three bits starting from the LSB in the first user code UC1.

For example, the (1-1)-th interface IT11 may replace upper three bits of the first address code ADDC1 with lower three bits in the first user code UC1 to generate the second address code ADDC2.

Accordingly, the first user code UC1 may include bits corresponding to the product of a first number and a maximum hop determined by the number and arrangement of a plurality of chips 121 to 12n.

For example, when nine chips are arranged in a 3x3 array, the maximum hop is determined to be 8 and the first user code UC1 may include 24 bits, which is the product of the maximum hop "8" and the first number "3." The first number may be the number of bits in each set of interface bits.

Referring to FIG. 6B, the (1-1)-th interface IT11 may generate a second user code UC2 from the first user code UC1.

For example, the (1-1)-th interface IT11 may generate the second user code UC2 by shifting the bits included in the first user code UC1 to a first direction or a least-significant bit direction, e.g. to the right by a first number (for example, the number of bits in the interface bits, e.g., 3 bits).

For example, the (1-1)-th interface IT11 may generate the second user code UC2 by erasing the lower three bits (for example, the second interface bits IB2s) of the first user code UC1 and shifting the remaining bits to the right by three bits. After erasing the lower three bits and shifting the remaining bits to the right, the second user code UC2 may be padded (e.g., with zeros) to maintain the previous length of the first user code UC1. Alternatively, the second user code UC2 may not be padded, and therefore may be shortened relative to the first user code UC1.

Referring FIGS. 6A, 6B, and 7, the (1-1)-th interface IT11 may transmit the second address code ADDC2 and the second user code UC2 to the second chip 122.

For example, the (1-1)-th interface IT11 may transmit the second address code ADDC2 and the second user code UC2 to the (2-1)-th interface IT21. In addition, the (2-1)-th interface IT21 may transmit the second address code ADDC2 and the second user code UC2, transmitted from the (1-1)-th interface IT11, to the second interconnect IC2.

Also, the second interconnect IC2 may transmit the second address code ADDC2 to a (2-2)-th interface IT22.

For example, the second interconnect IC2 may transmit the second address code ADDC2 to the (2-2)-th interface IT22 based on the pre-stored second lookup table when the second interface bits IB2s of the second address code ADDC2 correspond to the (2-2)-th interface IT22.

For example, when the second interface bits IB2s of the second address code ADDC2 are "111," the second interconnect IC2 may transmit the second address code ADDC2 to the (2-2)-th interface IT22 corresponding to "111" based on the second lookup table.

The second interface bits IB2s may be interpreted as the first number of bits (3 bits) starting from a most significant bit MSB of the second address code ADDC2.

Alternatively or additionally, the second interconnect IC2 may transmit the second user code UC2 to the (2-2)-th interface IT22.

For example, when the second interface bits IB2s are determined to correspond to the (2-2)-th interface IT22 based on the second lookup table, the second interconnect IC2 may transmit the second user code UC2 to the (2-2)-th interface IT22.

Referring together to FIGS. 7 and 8A, the (2-2)-th interface IT22 may generate a third address code ADDC3 based on the second address code ADDC2 and the second user code UC2.

For example, the (2-2)-th interface IT22 may generate a third address code ADDC3 based on the second address code ADDC2 and the second user code UC2 in response to the second address code ADDC2 and the second user code UC2 being received from the second interconnect IC2.

The (2-2)-th interface IT22 may replace the second interface bits IB2s of the second address code ADDC2 with a third interface bits IB3s of the second user code UC2 to generate the third address code ADDC3.

The third interface bits IB3s may be interpreted as the first number of bits (3 bits) starting from the least significant bit LSB in the second user code UC2.

For example, the (2-2)-th interface IT22 may replace upper three bits of the second address code ADDC2 with lower three bits of the second user code UC2 to generate the third address code ADDC3.

Referring to FIG. 8B, the (2-2)-th interface IT22 may generate a third user code UC3 from the second user code UC2.

For example, the (2-2)-th interface IT22 may generate the third user code UC3 by shifting bits included in the second user code UC2 to the right by a first number of bits (3 bits).

For example, the (2-2)-th interface IT22 may generate the third user code UC3 by erasing the lower three bits (for example, the third interface bits IB3s) of the second user code UC2 and shifting the remaining bits to the right by three bits.

According to some example embodiments, when the third interface bits IB3s included in the second user code UC2 are a self-address value (for example, "000"), the operation of generating the third user code UC3 may be omitted. For instance, when the third interface bits IB3s included in the second user code UC2 correspond to a self-address value, the third user code UC3 may be set to be the same as the second user code UC2.

Referring to FIGS. 8A, 8B, and 9, the (2-2)-th interface IT22 may transmit the third address code ADDC3 to the third chip 123. In addition, the (2-2)-th interface may transmit the third user code UC3 to the third chip 123,

For example, the (2-2)-th interface IT22 may transmit the third address code ADDC3 and the third user code UC3 to a (3-4)-th interface IT34. The (3-4)-th interface IT34 may transmit the third address code ADDC3 and the third user code UC3, transmitted from the (2-2)-th interface IT22, to the third interconnect IC3.

Referring to FIG. 9, when the third interface bits IB3s of the third address code ADDC3 have a self-address value (for example, "000") stored in the third lookup table, the third interconnect IC3 may access at least one element included in the third chip 123.

For example, the third interconnect IC3 may determine whether the third interface bits IB3s have the self-address value (for example, "000"), based on the third lookup table.

Alternatively or additionally, when the third interface bits IB3s are the self-address value (for example, "000") stored in the third lookup table, the third interconnect IC3 may access at least one element (for example, a third memory M3) included in the third chip 123.

According to some example embodiments, when the third interface bits IB3s have the self-address value (for example, "000"), the third interconnect IC3 may access an element specified by the first target bits TGB1s excluding the third interface bits IB3s from the third address code ADDC3.

For example, the first target bits TGB1s of the third address code ADDC3 may include bits corresponding to the third memory M3 and bits corresponding to addresses within the third memory M3. Accordingly, the third interconnect IC3 may access data stored at a specific address within the third memory M3 specified by the first target bits TGB1s.

For example, the third interconnect IC3 may read the data stored at the specific address within the third memory M3 specified by the first target bits TGB1s.

For example, the third interconnect IC3 may store data at the specific address within the third memory M3 specified by the first target bits TGB1s.

However, the type of element included in the third chip 123 accessed by the third interconnect IC3 based on the third address code ADDC3 and the type of operation performed on the element are not limited to the above-described examples.

According to some example embodiments, when the third interconnect IC3 reads data stored at the specific address within the third memory M3, the third interconnect IC3 may transmit the read data to the second chip 122.

For example, the third interconnect IC3 may transmit the data, read from the third memory M3, to the second interconnect IC2 through a (3-4)-th interface IT34 and a (2-2)-th interface IT22.

The second interconnect IC2 may transmit the data, received from the third interconnect IC3, to the first chip 121.

For example, the second interconnect IC2 may transmit the data, received from the third interconnect IC3, to the first interconnect IC1 through the (2-1)-th interface IT21 and the (1-1)-th interface IT11.

The first interconnect IC1 may transmit the data, received from the second interconnect IC2, to the first CPU CPU1.

For example, the system-on-chip 100, in response to a request from the first CPU CPU1, may read data from a memory within another chip through a specified path and then transmit the read data back to the first CPU CPU1 through a reverse direction of that path.

Referring to the above-described configurations, the interconnects included in the plurality of chips 121 to 12n may perform communication between different chips based on a pre-stored lookup table. The lookup table may include interface bits corresponding to the interfaces of each chip.

Accordingly, the lookup table stored in each of the plurality of chips 121 to 12n may include a relatively smaller amount of data compared to a case in which the lookup table includes bits corresponding to each of the plurality of chips.

As a result, the system-on-chip 100 according to example embodiments may reduce the amount of data stored and processed by each chip when accessing another chip.

Alternatively or additionally, referring to the above-described configurations, the plurality of chips 121 to 12n may store lookup tables for their respective interfaces. Thus, the system-on-chip 100 according to some example embodiments may change the number and arrangement of the chips 121 to 12n without modifying the lookup table pre-stored in each chip.

As a result, the system-on-chip 100 according to example embodiments may reduce the overhead required to or used change the number and/or arrangement of the plurality of chips 121 to 12n.

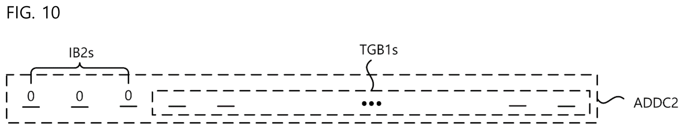

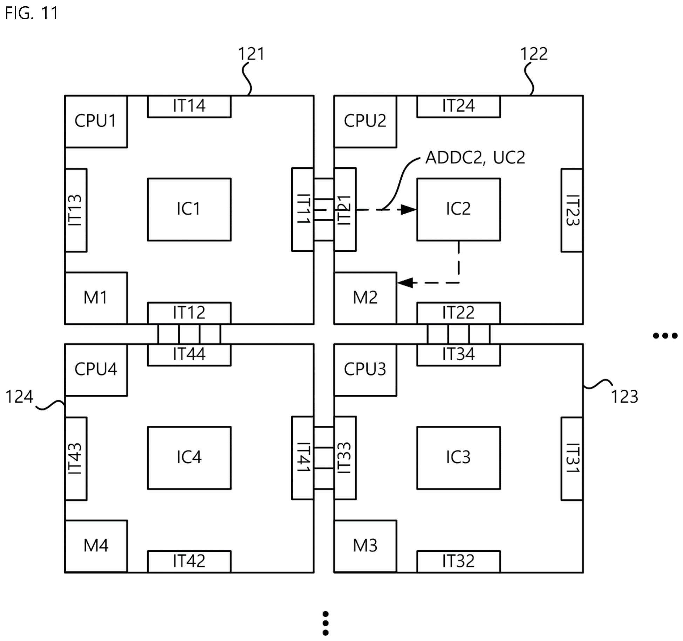

FIG. 10 is a diagram illustrating a second address code in which second interface bits have a self-address value, according to another embodiment. FIG. 11 is a diagram illustrating a configuration in which a second chip performs an operation on a second memory when the second interface bits have a self-address value, according to some example embodiments.

Referring to FIGS. 10 and 11, when the second interface bits IB2s of the second address code ADDC2 have a self-address value (for example, "000") according to some example embodiments, the second interconnect IC2 may perform operations on an element included in the second chip 122.

For example, when the second interface bits IB2s of the second address code ADDC2 are a self-address value (for example, "000") stored in the second lookup table, the second interconnect IC2 may access at least one element included in the second chip 122.

The second interconnect IC2 may determine whether the second interface bits IB2s have the self-address value (for example, "000") based on the second lookup table.

Furthermore, when the second interface bits IB2s have the self-address value (for example, "000") stored in the second lookup table, the second interconnect IC2 may access at least one element (for example, second memory M2) included in the second chip 122.

According to some example embodiments, when the second interface bits IB2s have the self-address value (for example, "000"), the second interconnect IC2 may access an element specified by the first target bits TGB1s, excluding the second interface bits IB2s from the second address code ADDC2.

For example, the first target bits TGB1s of the second address code ADDC2, excluding the second interface bits IB2s, may include bits representing the second memory M2 and bits indicating an address within the second memory M2. Accordingly, the second interconnect IC2 may access data stored at the specific address within the second memory M2 as specified by the first target bits TGB1s.

For example, the second interconnect IC2 may read the data stored at a specific address within the second memory M2 specified by the first target bits TGB1s.

For example, the second interconnect IC2 may write data to a specific address within the second memory M2 specified by the first target bits TGB1s.

However, the type of element within the second chip 122 accessed by the second interconnect IC2 based on the second address code ADDC2 and the type of operation performed on the element are not limited to the above-described examples.

Referring to the above-described configurations, the interconnects included in the plurality of chips 121 to 12n may perform operations required by a specific program based on a pre-stored lookup table.

For example, the second interconnect IC2 may transmit the second address code ADDC2 to a specific interface when the second interface bits IB2s within the ADDC2 corresponding to the interface based on the pre-stored second lookup table.

For example, the second interconnect IC2 may perform operations on an element included in the second chip 122 when the second interface bits IB2s of the second address code ADDC2 have a self-address value based on the second lookup table.

The second lookup table may include interface bits corresponding to the interfaces of each chip.

Therefore, according to some example embodiments, the lookup table stored in each of the plurality of chips 121 to 12n may include a relatively smaller amount of data compared to a case in which the lookup table includes bits corresponding to each of the plurality of chips 121 to 12n.

As a result, the system-on-chip 100 according to some example embodiments may reduce the amount of data that is stored and that processed by each chip so as to access other chips.

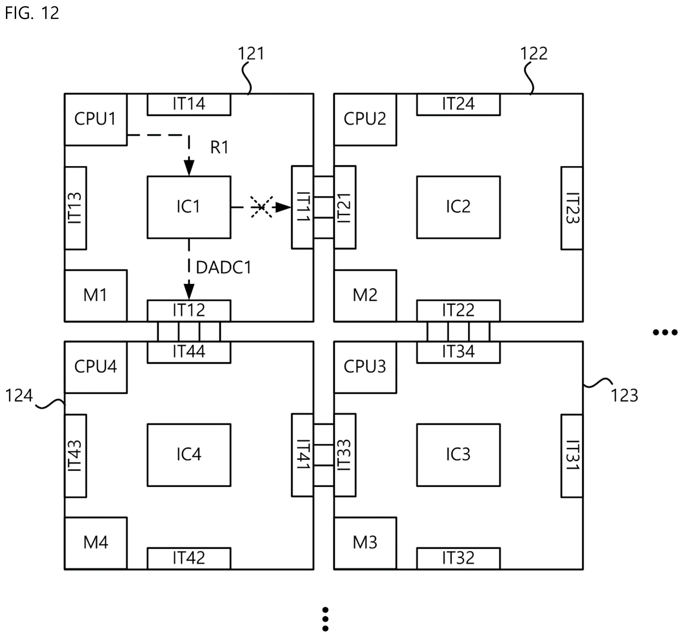

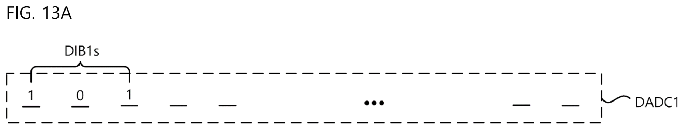

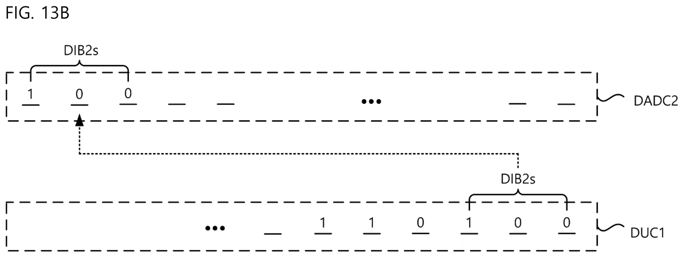

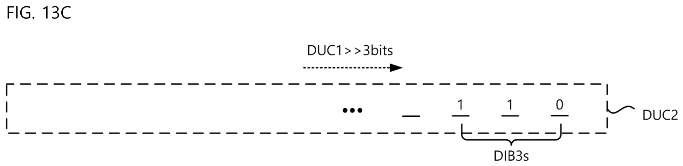

FIG. 12 is a diagram illustrating a configuration in which the first interconnect transmits a first bypass code to a (1-2)-th interface, according to some example embodiments. FIG. 13A is a diagram illustrating a first bypass code according to some example embodiments. FIG. 13B is a diagram illustrating a configuration in which the (1-2)-th interface generates a second bypass code based on a first bypass user code, according to some example embodiments. FIG. 13C is a diagram illustrating a configuration in which the (1-2)-th interface generates a second bypass user code from a first bypass user code, according to some example embodiments.

Referring to FIG. 12 to FIG. 13C, the first interconnect IC1 may transmit a bypass code to an interface corresponding to the bypass code when the number of communications via a specific interface exceeds a threshold during a specified time period.

For example, the first interconnect IC1 may count responses transmitted from each of the plurality of first interfaces IT11 to IT14 in response to address codes being transmitted to the corresponding first interfaces IT11 to IT14.

For example, when the first interconnect IC1 transmits an address code to the (1-1)-th interface IT11, the first interconnect IC1 may receive a response from the (1-1)-th interface IT11 in response to accessing an element in another chip through at least one interconnect.

For example, the first interconnect IC1 may count the number of the address codes sent to the (1-1)-th interface IT11.

For example, the first interconnect IC1 may count the number of times the first CPU CPU1 accesses an element in another chip through each of the plurality of first interfaces IT11 to IT14 within a specified time period.

Referring to FIG. 12 and FIG. 13A, when the number of responses counted through the (1-1)-th interface IT11 exceeds a threshold during a specified time period, the first interconnect IC1 may transmit the first bypass code DADC1 to the (1-2)-th interface IT12 corresponding to the first bypass interface bits DIB1s within the first bypass code DADC1.

The first bypass code DADC1 may be interpreted as a code stored to correspond to the first program along with the first address code ADDC1. For example, the first bypass code DADC1 may be a code stored on the first chip (e.g., stored along with the first address code ADDC1) and corresponding to the first program.

For example, when the number of responses counted through the (1-1)-th interface IT11 exceeds a threshold during a specified time period, the first interconnect IC1 may determine the (1-2)-th interface IT12 corresponding to the first bypass interface bits DIB1s included in the first bypass code DADC1 based on the first lookup table LUT1.

For example, when the first bypass interface bits DIB1s are "101," the first interconnect IC1 may transmit the first bypass code DADC1 to the (1-2)-th interface IT12 corresponding to "101" in the first lookup table LUT1.

Referring to FIG. 13B, the (1-2)-th interface IT12 according to some example embodiments may generate a second bypass code DADC2 based on the first bypass code DADC1 and the first bypass user code DUC1.

For example, the (1-2)-th interface IT12 may generate the second bypass code DADC2 based on the first bypass code DADC1 and the first bypass user code DUC1 in response to the first bypass code DADC1 being received from the first interconnect IC1.

The first bypass user code DUC1 may be stored in the first chip 121 (or the first memory M1) corresponding to the first program.

The (1-2)-th interface IT12 may generate the second bypass code DADC2 by replacing the first bypass interface bits DIB1s in the first bypass code DADC1 with the second bypass interface bits DIB2s of the first bypass user code DUC1.

The second bypass interface bits DIB2s may be interpreted as the first specified number of bits (for example, 3 bits) starting from a least significant bit LSB of the first bypass user code DUC1.

For example, the (1-2)-th interface IT12 may generate the second bypass code DADC2 by replacing upper three bits of the first bypass code DADC1 with lower three bits of the first bypass user code DUC1.

Referring to FIG. 13C, the (1-2)-th interface IT12 may generate a second bypass user code DUC2 from the first bypass user code DUC1.

For example, the (1-2)-th interface IT12 may shift bits of the first bypass user code DUC1 to a first direction or a least-significant bit direction, e.g., to the right by the first number of bits (for example, 3 bits) to generate the second bypass user code DUC2.

For example, the (1-2)-th interface IT12 may erase the lower 3 bits (for example, second bypass interface bits DIB2s) from the first bypass user code DUC1, and shift the remaining bits to the right by 3 bits to generate the second bypass user code DUC2.

Referring to the above-described configurations, the first interconnect IC1 according to some example embodiments may access another chip using an interface based on a bypass code when the number of communications through a specific interface exceeds a threshold within a specified time period.

As a result, the system-on-chip 100 according to example embodiments may significantly reduce communication delays between chips by allowing communication via specific interfaces to be concentrated for a specified time period on each chip.

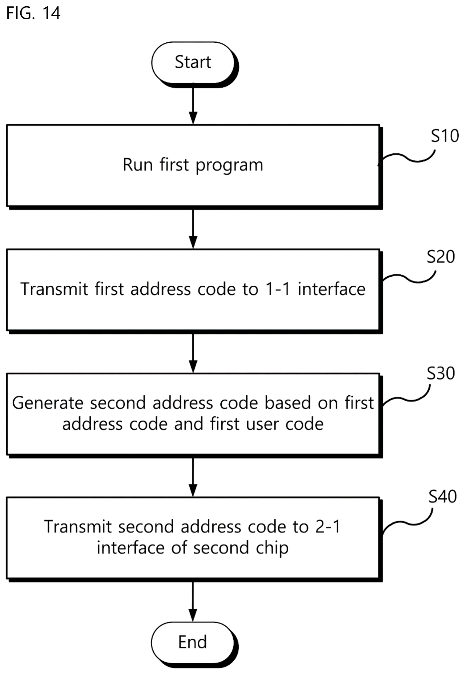

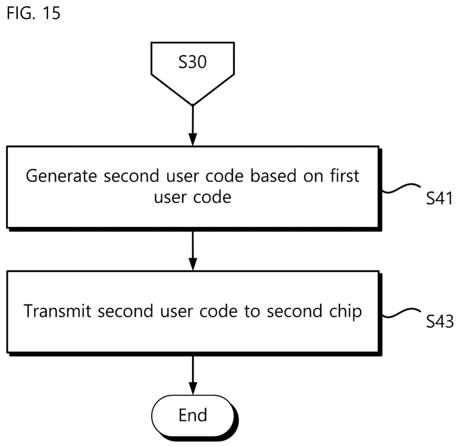

FIG. 14 is a flowchart illustrating a method of transmitting a first address code to a second chip in response to a first request, according to some example embodiments. FIG. 15 is a flowchart illustrating a method of transmitting a second user code to a second chip, according to some example embodiments.

Referring to FIG. 14 and FIG. 15, each of the plurality of chips 121 to 12n included in the system-on-chip 100 according to some example embodiments may access elements in other chips using a pre-stored lookup table. The lookup table stored in each chip may include interface bits corresponding to the plurality of interfaces included in each chip.

Referring to FIG. 14, in operation S10, the first CPU CPU1 or the first chip 121 may run the first program according to some example embodiments. For example, the first CPU CPU1 may execute at least one stored code corresponding to the first program.

Furthermore, when access to an element in another chip is required during the execution of the first program, the first CPU CPU1 may transmit a first request R1 to the first interconnect IC1.

Alternatively or additionally, the first CPU CPU1 may transmit the first address code ADDC1 and the first user code UC1 corresponding to the first program, along with the first request R1, to the first interconnect IC1.

In operation S20, the first interconnect IC1 according to some example embodiments may transmit the first address code ADDC1 to the (1-1)-th interface IT11.

For example, the first interconnect IC1 may transmit the first address code ADDC1 to the (1-1)-th interface IT11, corresponding to the first interface bits IB1s included in the first address code ADDC1, in response to the first request R1.

For example, the first interface bits IB1s may be interpreted as the first number of bits (for example, 3 bits) starting from the most significant bit MSB of the first address code ADDC1.

The first interconnect IC1 may determine an interface corresponding to the first interface bits IB1s included in the first address code ADDC1, based on a pre-stored first lookup table LUT1.

For example, when the first interface bits IB1s of the first address code ADDC1 are "100," the first interconnect IC1 may determine that the (1-1)-th interface IT11 corresponds to "100," based on the first lookup table LUT1.

Furthermore, based on the first lookup table LUT1, the first interconnect IC1 may transmit the first address code ADDC1 to the (1-1)-th interface IT11 determined to correspond to the first interface bits IB1s.

For example, the first interconnect IC1 may transmit the first address code ADDC1 to an interface corresponding to upper 3 bits of the first address code ADDC1 on the first lookup table LUT1 in response to the first request R1 from the first CPU CPU1.

In operation S30, the (1-1)-th interface IT11 according to some example embodiments may generate a second address code ADDC2 based on the first address code ADDC1 and the first user code UC1.

For example, the (1-1)-th interface IT11 may generate the second address code ADDC2 based on the first address code ADDC1 and the first user code UC1 in response to the first address code ADDC1 being received from the first interconnect IC1.

The first user code UC1 may be stored on the first chip 121 (or the first memory M1) corresponding to the first program.

The (1-1)-th interface IT11 may generate the second address code ADDC2 by replacing the first interface bits IB1s of the first address code ADDC1 with a second interface bits IB2s of the first user code UC1.

For example, the second interface bits IB2s may be interpreted as the first number of bits (for example, 3 bits) from a least significant bit LSB of the first user code UC1.

For example, the (1-1)-th interface IT11 may generate the second address code ADDC2 by replacing the upper 3 bits of the first address code ADDC1 with lower 3 bits of the first user code UC1.

In operation S40, the (1-1)-th interface IT11 according to some example embodiments may transmit the second address code ADDC2 to the second chip 122. For example, the (1-1)-th interface IT11 may transmit the second address code ADDC2 to the (2-1)-th interface IT21.

Furthermore, the (2-1)-th interface IT21 may transmit the second address code ADDC2, received from the (1-1)-th interface IT11, to the second interconnect IC2.

Referring to FIG. 15, in operation S41, the (1-1)-th interface IT11 according to one embodiment may generate the second user code UC2 from the first user code UC1.

For example, the (1-1)-th interface IT11 may generate the second user code UC2 in response to the second address code ADDC2 being generated.

In some example embodiments, the (1-1)-th interface IT11 may generate the second user code UC2 by shifting bits, included in the first user code UC1, to the right by a first number (for example, 3 bits).

For example, the (1-1)-th interface IT11 may generate the second user code UC2 by erasing lower 3 bits of the first user code UC1 and shifting the remaining bits 3 bits to the right.

In operation S43, the (1-1)-th interface IT11 according to some example embodiments may transmit the second user code UC2 to the second chip 122. For example, the (1-1)-th interface IT11 may transmit the second user code UC2 to the (2-1)-th interface IT21.

Furthermore, the (2-1)-th interface IT21 may transmit the second user code UC2, received from the (1-1)-th interface IT11, to the second interconnect IC2.

According to some example embodiments, operations S40 in FIG. 14 and S43 in FIG. 15 may be performed simultaneously. For example, the (1-1)-th interface IT11 may transmit both the second address code ADDC2 and the second user code UC2 together to the (2-1)-th interface IT21.

However, the order (or timing), in which operations S40 in FIG. 14 and S43 in FIG. 15 are performed, is not limited thereto.

Referring to the above-described configurations, the interconnects included in the plurality of chips 121 to 12n may perform communication between different chips based on a pre-stored lookup table. The lookup table stored on each chip (or interconnect) may include interface bits corresponding to the interfaces of each chip.

Thus, a lookup tables stored in each of the plurality of chips 121 to 12n may include a relatively smaller amount of data, compared to a case in which each lookup table includes bits corresponding to each of the plurality of chips 121 to 12n.

As a result, the system-on-chip 100 according to example embodiments may reduce the amount of data stored and processed by each chip to access other chips.

In addition, referring to the above-described configurations, the system-on-chip 100 according to some example embodiments may store a lookup table for each interface in each of the plurality of chips 121 to 12n. Thus, the system-on-chip 100 may change the number and arrangement of the plurality of chips 121 to 12n without modifying the lookup tables stored in each chip.

As a result, the system-on-chip 100 according to example embodiments may reduce the overhead required to change the number and arrangement of the plurality of chips 121 to 12n.

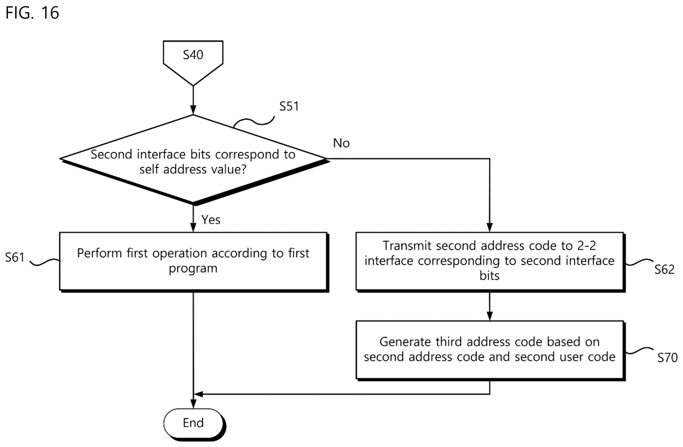

FIG. 16 is a flowchart illustrating the operation of a second interconnect based on second interface bits included in a second address code, according to some example embodiments.

Referring to FIG. 16, when the second interface bits IB2s of the second address code ADDC2 have a self-address value (for example, "000"), the second interconnect IC2 may perform an operation on an element included in the second chip 122.

In operation S51, the second interconnect IC2 may determine whether the second interface bits IB2s have a self-address value.

For example, the second interconnect IC2 may determine whether the second interface bits IB2s of the second address code ADDC2 have a self-address value (for example, "000") based on a second lookup table stored in the second interconnect IC2.

In operation S61, when the second interface bits IB2s of the second address code ADDC2 have the self-address value (for example, "000") stored in the second lookup table, the second interconnect IC2 may perform a first operation based on the first program.

For example, when the second interface bits IB2s are the self-address value (for example, "000") stored in the second lookup table, the second interconnect IC2 may access at least one element (for example, the second memory M2) included in the second chip 122.

According to some example embodiments, when the second interface bits IB2s have the self-address value (for example, "000"), the second interconnect IC2 may access an element specified by the first target bits TGB1s of the second address code ADDC2, excluding the second interface bits IB2s.

For example, the first target bits TGB1s of the second address code ADDC2, excluding the second interface bits IB2s, may include bits representing the second memory M2 and bits representing an address within the second memory M2. Accordingly, the second interconnect IC2 may access data stored at a specific address within the second memory M2 specified by the first target bits TGB1s.

According to some example embodiments, when the second interface bits IB2s have the self-address value (for example, "000"), the second interconnect IC2 may perform a first operation, required during a process of running the first program, on at least one element included in the second chip 122.

For example, the second interconnect IC2 may read data stored at a specific address within the second memory M2 specified by the first target bits TGB1s.

For example, the second interconnect IC2 may store data at a specific address within the second memory M2 specified by the first target bits TGB1s.

However, the types of elements in the second chip 122 accessed by the second interconnect IC2 based on the second address code ADDC2, and the types of operations performed on the elements, are not limited to the above-described examples.

In operation S62, when the second interface bits IB2s do not have the self-address value (for example, "000") stored in the second lookup table, the second interconnect IC2 may transmit the second address code ADDC2 to the (2-2)-th interface IT22.

For example, when the second interface bits IB2s correspond to the (2-2)-th interface IT22 in the second lookup table, the second interconnect IC2 may transmit the second address code ADDC2 to the (2-2)-th interface IT22.

In operation S70, the (2-2)-th interface IT22 according to some example embodiments may generate a third address code ADDC3 based on the second address code ADDC2 and the second user code UC2.

For example, the (2-2)-th interface IT22 may generate the third address code ADDC3 based on the second address code ADDC2 and the second user code UC2 in response to the second address code ADDC2 and the second user code UC2 being received from the second interconnect IC2.

The (2-2)-th interface IT22 may generate the third address code ADDC3 by replacing the second interface bits IB2s of the second address code ADDC2 with the third interface bits IB3s of the second user code UC2.

The third interface bits (IB3s) may be interpreted as a first number of bits (for example, 3 bits) starting from a least significant bit LSB of the second user code UC2.

For example, the (2-2)-th interface IT22 may generate the third address code ADDC3 by replacing upper 3 bits of the second address code ADDC2 with lower 3 bits of the second user code UC2.

Alternatively or additionally, the (2-2)-th interface IT22 may transmit the third address code ADDC3 to the third chip 123.

Alternatively or additionally, the (2-2)-th interface IT22 may generate the third user code UC3 by shifting bits of the second user code UC2 to the right by a first number of bits.

Alternatively or additionally, the (2-2)-th interface IT22 may also transmit the third user code UC3, along with the third address code ADDC3, to the third chip 123.

While this example relates to the (2-2)-th interface IT22, it will be appreciated that another interface may be accessed depending on the particular value of the second interface bits IB2s. Furthermore, while this example relates to the second chip 122, it will be appreciated that this may be equally applied to any of the plurality of chips 121 to 12n.

Referring to the above-described configurations, the interconnects included in the plurality of chips 121 to 12n may perform an operation required for a specific program, based on a pre-stored lookup table.

For example, when the second interface bits IB2s of the second address code ADDC2 correspond to a specific interface based on the pre-stored second lookup table, the second interconnect IC2 may transmit the second address code ADDC2 to the interface.

For example, when the second interface bits IB2s of the second address code ADDC2 have a self-address value based on the pre-stored second lookup table, the second interconnect IC2 may perform an operation on the element included in the second chip 122.

The second lookup table may include interface bits corresponding to interfaces of each chip.

Therefore, according to some example embodiments, the lookup table stored in each of the plurality of chips 121 to 12n may include a relatively smaller amount of data, compared to a case in which each lookup table includes bits corresponding to each of the plurality of chips 121 to 12n.

As a result, the system-on-chip 100 according to some example embodiments may reduce the amount of data stored and process by each chip to access other chips.

As described above, according to example embodiments, the interconnects included in the plurality of chips 121 to 12n may perform communication between different chips based on a pre-stored lookup table. The lookup table may include interface bits corresponding to interfaces of each chip.

Therefore, according to some example embodiments, the lookup table stored in each of the plurality of chips 121 to 12n may include a relatively smaller amount of data, compared to a case in which each lookup table includes bits corresponding to each of the plurality of chips 121 to 12n.

For example, when the number of chips 121 to 12n is 9, the lookup table stored in each chip may store bits corresponding to relatively fewer 4 interfaces and a self-address value, compared to a case in which bits corresponding to each of the 9 chips are stored.

As a result, the system-on-chip 100 according to some example embodiments may reduce the amount of data stored and processed by each chip to access other chips.

For example, the system-on-chip 100 according to some example embodiments may improve the performance of operations of each chip.

Alternatively or additionally, referring to the above-described configurations, the system-on-chip 100 may store a lookup table for each interface in each of the plurality of chips 121 to 12n. Thus, the system-on-chip 100 may change the number and arrangement of the plurality of chips 121 to 12n without modifying the lookup tables stored in each chip.

As a result, the system-on-chip 100 according to example embodiments may reduce the overhead required to change the number and arrangement of the plurality of chips 121 to 12n.

As set forth above, according to example embodiments, a system-on-chip may reduce the amount of data processed by each chip to access other chips.

Any of the elements and/or functional blocks disclosed above may include or be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. The processing circuitry may include electrical components such as at least one of transistors, resistors, capacitors, etc. The processing circuitry may include electrical components such as logic gates including at least one of AND gates, OR gates, NAND gates, NOT gates, etc.

Embodiments are set out in the following Clauses:
Clause 1. A system-on-chip (SoC) comprising:
   a first chip and a second chip adjacent to each other,
   wherein the first chip comprises,
      a (1-1)-th interface on an edge adjacent to the second chip,
      a first central processing unit (CPU) configured to execute a first program, and
      a first interconnect configured to transmit a first address code to a (1-1)-th interface corresponding to a first number of first interface bits of the first address code stored to correspond to the first program, the transmitting the first address code in response to a first request corresponding to the first program being received from the first CPU,
   and the (1-1)-th interface is configured to,
   generate a second address code by replacing the first interface bits with a second number of second interface bits of a first user code stored to correspond to the first program, and
   transmit the second address code to the second chip through a (2-1)-th interface adjacent to the (1-1)-th interface.
Clause 2. The SoC of Clause 1, wherein,
   the second interface bits comprise the first number of bits starting from a least significant bit of the first user code, and
   the (1-1)-th interface is configured to,
      generate a second user code by shifting bits of the first user code to a least significant direction by the first number, in response to the second address code being generated, and
      transmit the second user code to the second chip through the (2-1)-th interface.
Clause 3. The SoC of Clause 1 or Clause 2, wherein,
   the second chip comprises a second interconnect configured to transmit the second address code to a (2-2)-th interface in response to the second interface bits of the second address code corresponding to the (2-2)-th interface, and
   the second interconnect is configured to determine the (2-2)-th interface corresponding to the second interface bits based on a second lookup table comprising interface bits corresponding to each of a plurality of second interfaces included in the second chip.
Clause 4. The SoC of Clause 3, wherein the (2-2)-th interface is configured to:
   generate a third address code by replacing the second interface bits with a third number of third interface bits comprising a least significant bit of a second user code;
   generate a third user code by shifting bits of the second user code to a least significant bit direction by the first number; and
   transmit the third address code and the third user code to a third chip through a (3-1)-th interface, the (3-1)-th interface adjacent to the (2-2)-th interface, the (3-1)-th interface within the third chip adjacent to the second chip, the third chip included in the SOC.
Clause 5. The SoC of Clause 3 or Clause 4, wherein the second interconnect is configured to perform an operation based on the first program on a first element, the first element included in the second chip, the operation based on bits of the second address code excluding the second interface bits, the operation performed in response to the second interface bits having a self-address value.

While some example embodiments have been shown and described above, it will be apparent to those of ordinary skill in the art that modifications and variations could be made without departing from the scope of inventive concepts as defined by the appended claims. Furthermore, example embodiments are not necessarily mutually exclusive with one another. For example, some example embodiments may include one or more features described with reference to one or more figures, and may also include one or more other features described with reference to one or more other figures.

## Claims

1. A system-on-chip, SoC, comprising:
a plurality of chips (121-12n) connected to each other,
wherein a first chip (121) among the plurality of chips (121-12n) comprises:
a plurality of first interfaces (IT11-IT14) respectively arranged on edges of the first chip (121);
a first central processing unit, CPU, (CPU1) configured to execute a first program; and
a first interconnect (IC1) configured to transmit a first address code (ADDC1) to a (1-1)-th interface, the (1-1)-th interface corresponding to a first number of first interface bits of the first address code (ADDC1) stored to correspond to the first program, the first interconnect (IC1) being configured to transmit the first address code (ADDC1) in response to a first request (R1) being received from the first CPU (CPU1), the first request (R1) corresponding to the first program.

2. The SoC of claim 1, wherein,
the first interconnect (IC1) is configured to transmit the first address code (ADDC1) to the (1-1)-th interface corresponding to the first interface bits based on a first lookup table, and
the first lookup table comprises interface bits corresponding to each of the plurality of first interfaces.

3. The SoC of claim 2, wherein the (1-1)-th interface is configured to:
generate a second address code by replacing the first interface bits with a second number of second interface bits comprising a least significant bit of a first user code stored to correspond to the first program;
generate a second user code by shifting bits of the first user code in a least significant bit direction by the second number of second interface bits; and
transmit the second address code and the second user code to a second chip through a (2-1)-th interface adjacent to the (1-1)-th interface,
wherein the (2-1)-th interface is within the second chip, the second chip is adjacent to the first chip (121), and the second chip is among the plurality of chips.

4. The SoC of claim 3, wherein
the second chip comprises a second interconnect configured to transmit the second address code to a (2-2)-th interface in response to the second interface bits of the second address code corresponding to the (2-2)-th interface, and
the second interconnect is configured to determine the (2-2)-th interface corresponding to the second interface bits based on a second lookup table comprising interface bits corresponding to each of a plurality of second interfaces included in the second chip.

5. The SoC of claim 4, wherein the (2-2)-th interface is configured to:
generate a third address code by replacing the second interface bits with a third number of third interface bits comprising a least significant bit of the second user code;
generate a third user code by shifting bits of the second user code in the least significant bit direction by the third number of third interface bits; and
transmit the third address code and the third user code to a third chip through a (3-1)-th interface adjacent to the (2-2)-th interface,
wherein the (3-1)-th interface is within the third chip, the third chip is adjacent to the second chip, and the third chip is among the plurality of chips.

6. The SoC of claim 4 or claim 5, wherein:
the second interconnect is configured to perform an operation on a first element, the operation being based on the first program, the first element being included in the second chip, the operation being based on the second address code, and the operation being performed in response to the second interface bits having a self-address value.

7. The SoC of claim 6, wherein,
the first element comprises a memory, and
the second interconnect is configured to
read data stored within the memory at an address specified by bits of the second address code and excluding the second interface bits; and
transmit the read data to the (2-1)-th interface.

8. The SoC of any of claims 3-7, wherein the first user code comprises bits corresponding to a product of the first number and a maximum hop, the maximum hop being based on a number of the plurality of chips and an arrangement of the plurality of chips.

9. The SoC of any preceding claim, wherein the first interface bits comprise a number of bits starting from a most significant bit of the first address code (ADDC1).

10. The SoC of any preceding claim, wherein the first interconnect (IC1) is configured to:
count responses received from each of the plurality of first interfaces in response to an address code being transmitted to each of the plurality of first interfaces; and
transmit a first bypass code to a (1-2)-th interface corresponding to first bypass interface bits of the first bypass code stored to correspond to the first program in response to a number of responses counted for the (1-1)-th interface during a specified time period exceeding a threshold.

11. A method of operating a system-on-chip, SoC, comprising a plurality of chips, the method comprising:
running a first program by a first central processing unit, CPU, included in a first chip (121) among the plurality of chips;
transmitting a first address code (ADDC1) to a (1-1)-th interface corresponding to a first number of first interface bits of the first address code (ADDC1) stored to correspond to the first program, in response to a first request (R1) corresponding to the first program being received from the first CPU (CPU1);
generating, by the (1-1)-th interface, a second address code by replacing the first interface bits with a second number of second interface bits, the generating the second address code starting from a least significant bit of a first user code stored to correspond to the first program; and
transmitting the second address code to a (2-1)-th interface of a second chip adjacent to the (1-1)-th interface, the second chip being among the plurality of chips.

12. The method of claim 11, further comprising:
generating a second user code by shifting bits of the first user code to a least significant bit direction by the first number; and
transmitting the second user code to the second chip through the (1-1)-th interface and the (2-1)-th interface.

13. The method of claim 12, further comprising:
transmitting, by the second chip, the second address code to a (2-2)-th interface of the second chip in response to the second interface bits corresponding to the (2-2)-th interface;
generating, by the (2-2)-th interface, a third address code by replacing the second interface bits with a third number of third interface bits, starting from a least significant bit of the second user code; and
transmitting the third address code to a third chip adjacent to the second chip through the (2-2)-th interface and a (3-1)-th interface adjacent to the (2-2)-th interface, the third chip being among the plurality of chips.

14. The method of claim 12, further comprising:
performing a first operation on a first element, the first operation being based on the first program, the first element being included in the second chip, the performing the first operation based on bits of the second address code excluding the second interface bits, and the performing the first operation being in response to the second interface bits having a self-address value.

15. The method of any of claims 11-14, wherein:
the transmitting of the first address code (ADDC1) to the (1-1)-th interface further comprises determining the (1-1)-th interface corresponding to the first interface bits based on a first lookup table; and
the first lookup table comprises interface bits corresponding to each of a plurality of first interfaces included in the first chip (121).
